(19) Europäisches Patentamt / European Patent Office / Office européen des brevets

(11) **EP 4 625 213 A1**

(12) **EUROPEAN PATENT APPLICATION**

(43) Date of publication:
**01.10.2025 Bulletin 2025/40**

(21) Application number: **24214369.1**

(22) Date of filing: **20.11.2024**

(51) International Patent Classification (IPC):
***G06F 17/18*** *(2006.01)*

(52) Cooperative Patent Classification (CPC):
**G06F 17/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Kontek, Krzysztof**
**00-071 Warsaw Mazowieckie (PL)**

(72) Inventor: **Kontek, Krzysztof**
**00-071 Warsaw Mazowieckie (PL)**

(74) Representative: **AOMB Polska Sp. z.o.o.**
**ul. Rondo Ignacego Daszynskiego 1**
**00-843 Warsaw (PL)**

Remarks:
Amended claims in accordance with Rule 137(2) EPC.

(54) **A METHOD, COMPUTER PROGRAM, AND COMPUTER-READABLE MEDIUM FOR DETECTING OUTLIER EVALUATORS IN A DECISION MAKING PROCESS**

(57)     An invention relates to a method for detecting outlier evaluators in an evaluation process comprising steps of Collecting a data matrix $S_{ij}$ to a computer system using an automatic input interface, wherein the elements of the matrix $S_{ij}$ are real numbers in a predefined range, wherein each of the elements of the matrix $S_{ij}$ represent a numerical evaluation provided by an evaluator j for an evaluated entity i. For each of the entity i calculating by the computer system an Initial Consensus in the form of a vector $M_i$ using a robust measure of location. Calculating by the computer system an Adjusted Distances $ED_j$ between each of the data matrix $S_{ij}$ provided by the evaluator j for entity i and the Initial Consensus $M_i$. Applying by the computer system a nonlinear transformation function *f* to the Adjusted Distances $ED_j$. Identifying by the computer system the outlier evaluators by detecting transformed Adjusted Distances $ED_j^*$ exceeding a robust upper-bound threshold. The invention relates also to a computer program and computer-readable medium configured to execute the above mentioned method.

**Description**

**Technical Field**

This invention relates to decision-making processes involving assessments by multiple evaluators, such as jurors, experts, reviewers, or users. It applies to performance-based competitions, public voting systems, educational assessments, expert review systems, and online review platforms. The invention proposes methods for standardizing evaluation data through transposition (EDT) and identifying and excluding outlier evaluators (EOE) to improve fairness and accuracy.

By automating real-time data collection, processing, and analysis, the system integrates seamlessly into environments that require rapid and dependable outcomes, such as music competitions, large-scale public voting events, and online review platforms. These advanced methods, which are rarely applied to subjective evaluations, offer a significant improvement in ensuring accurate and consistent decision-making aligned with evaluator consensus. While the primary focus is on systems processing subjective evaluations, the method and system are versatile enough to also be applicable to data collection systems using sensors.

**Prior Art**

In various decision-making processes, such as music competitions, sports evaluations, academic assessments, and online reviews, evaluators (e.g., jurors, experts, voters, or reviewers) provide scores or ratings. These evaluations are often influenced by bias or manipulation, leading to skewed or unfair outcomes where certain participants are unfairly favored or disadvantaged. Additionally, evaluators may use differing scoring standards. For instance, some evaluators might consistently score within a narrow range (e.g., 80-100), while others use the full scoring range (e.g., 1-100). This disparity in scoring tendencies can result in disproportionate influence on the final outcome, making the results potentially unfair.

Traditional methods for addressing extreme scores typically focus on deviations of individual scores from the consensus. These methods are often simplistic, such as using the trimmed mean, which removes extreme scores from both ends before averaging, or applying adjustments that constrain scores to predefined ranges around the mean (e.g., mean $\pm$ a constant value). Advanced statistical methods for detecting outliers are rarely employed in these contexts. While these techniques help mitigate extreme scores, they fail to address inconsistencies in overall scoring patterns or the broader impact of evaluators' score distributions on the final outcome. For example, a juror who consistently deviates from the rest of the group may go undetected if only individual scores are examined rather than their entire set of evaluations.

In online review systems (such as Amazon, Booking.com, or IMDb), users submit ratings for products, services, hotels, and films. It is suspected that many of these ratings do not reflect genuine user preferences. In some cases, ratings are the result of coordinated actions by groups of users or reviewers designed to manipulate rankings. Existing corrective actions, if applied at all, typically target individual outlier scores without addressing manipulation patterns across an evaluator's full range of ratings.

To address these challenges, this invention shifts the focus from correcting individual scores to identifying and excluding outlier evaluators, along with their entire set of biased evaluations, to ensure more reliable and fair outcomes. This emphasis on evaluating the evaluators themselves is particularly important in environments where jurors or evaluators are traditionally viewed as authoritative figures whose judgments are rarely questioned.

Another problem encountered in traditional decision-making systems, particularly those involving subjective assessments-is their heavy reliance on manual collection and processing of evaluation data. For example, in many classical music competitions, jurors submit their scores on paper at the end of each stage. The results are then manually entered into spreadsheets by administrators, a time-consuming process prone to error.

This invention introduces automated systems for real-time data collection and processing, streamlining the evaluation process in both small-scale and large-scale settings, such as classical music competitions, public voting systems, and online review platforms.

**Summary of the Invention**

The invention according to present application relates to a method for detecting outlier evaluators in an evaluation process comprising steps of:

a. Collecting a data matrix $S_{ij}$ to a computer system using an automatic input interface, wherein the elements of the matrix $S_{ij}$ are real numbers in a predefined range. Each of the elements of the matrix $S_{ij}$ represent a numerical evaluation provided by an evaluator j for an evaluated entity $i$.

b. For each of the entity $i$ calculating by the computer system an Initial Consensus in the form of a vector $M_i$ using a

robust measure of location.

c. Calculating by the computer system an adjusted distances $ED_j$ between each of the data matrix $S_{ij}$ provided by the evaluator $j$ for entity i and the Initial Consensus $M_i$.

d. Applying by the computer system a nonlinear transformation function $f$ to the Adjusted Distances $ED_j$.

$$ED_j^* = f\left(ED_j\right)$$

preferably using a natural logarithm $f(x) = ln(x)$ or a power function $f(x) = x^\infty$.

e. Identifying by the computer system the outlier evaluators by detecting transformed Adjusted Distances $\overline{ED_j}$ exceeding a robust upper-bound threshold.

Preferably after step b) there is performed operation of Linear Data Transposition comprising following steps:

b1) Setting by the computer system a Target Central Measure $M_{trg}$, preferably a median or an average of the data matrix $S_{ij}$.

b2) Calculating by the computer system the transposed scores $\overline{S_{ij}}$ by shifting the entities $i$ for each of the evaluator $j$ to match the target central measure $M_{trg}$ using the formula:

$$\overline{S_{ij}} = S_{ij} + M_{trg} - M_j$$

b3) Calculating by the computer system a spread $R_j$ for each of the evaluators, defined as:

$$R_j = S_{max_j} - S_{min_j}$$

b4) Determining by the computer system a target spread for scores $R_{trg}$, preferably an average or a median across all the evaluators $j$.

b5) Adjusting by the computer system the transposed scores $\overline{S_{ij}}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

wherein the data matrix $\overline{\overline{S_{ij}}}$ replaces the data matrix $S_{ij}$ for calculation of further steps.

Preferably after the step a) there is performed operation of Nonlinear Data Transposition comprising following steps:

a1) Calculating by the computer system for each evaluator $j$ the minimum $S_{min_j}$ and maximum $S_{max_j}$ values of their entities $i$.

a2) Setting by the computer system the Target Range $[S_{min_{trg}}, S_{max_{trg}}]$ preferably a median or an average of the minimum $S_{min_j}$ and maximum $S_{max_j}$.

a3) Normalizing by the computer system each evaluators j entity $i$ to fit within the range [0, 1] using the formula:

$$\overline{S_{ij}} = \frac{S_{ij} - S_{min_j}}{S_{max_j} - S_{min_j}}$$

a3) Calculating by the computer system the Average Normalized Values $AM_j$ for each evaluator $j$ and the average normalized value $AM$ across all entities $i$.

a4) Adjusting by the computer system the entities $i$ of each evaluator $j$ using a nonlinear transformation function such that $f(x) = x^\alpha$, where $\alpha$ is the parameter controlling the transformation, wherein the equation for each evaluator $j$ is:

$$\sum_i \overline{S_{ij}}^{\propto_j} = AM$$

a4) Renormalize by the computer system the entities $i$, using the formula:

$$\overline{\overline{S_{ij}}} = S_{min_{trg}} + \left(S_{max_{trg}} - S_{min_{trg}}\right)\overline{S_{ij}}^{\propto_j}$$

wherein the data matrix $\overline{\overline{S_{ij}}}$ replaces the data matrix $S_{ij}$ for calculations of further steps.

Preferably after step e) it comprises step:
f) Removing by the computer system the outlier evaluators $j$ and their associated entities $i$ from the data matrix $S_{ij}$ or replacing their entities $i$ with an aggregated data based on a historical performance or the robust statistical measures.

Preferably after step f) it comprises final step: recalculating by the computer system the results using robust measures of location, preferably mean, median or trimmed mean.

Preferably the Adjusted Distances $ED_j$ is calculated using the Adjusted Minkowski Distance formula:

$$ED_j = \left(\frac{\sum_{i=1}^{K} |S_{ij} - M_i|^p}{K^*}\right)^{\frac{1}{p}}$$

where:

- $S_{ij}$ is the score given by evaluator $j$ for entity $i$,
- $M_i$ is the Initial Consensus score for entity $i$,
- $K$ is the total number of the entities $i$, and
- $K^*$ is a number of the entities $i$ evaluated by the evaluator j,
- $p \geq 1$ is a parameter suitable for flexible weighting of deviations, with larger deviations penalized more heavily as $p$ increases.

Preferably the Adjusted Distances is calculated using the Adjusted Weighted Minkowski Distance formula:

$$ED_j = \left(\frac{\sum_{i=1}^{K} \left(w_i(M_i) \cdot |S_{ij} - M_i|\right)^p}{\sum_{i=1}^{K} w_i(M_i)^p}\right)^{\frac{1}{p}}$$

where:

- $S_{ij}$ is the score given by the evaluator $j$ for the entity $i$,
- $M_i$ is the Initial Consensus score for the entity $i$,
- $K$ is the total number of the entities $i$, and
- $p \geq 1$ is a parameter allowing flexible weighting of deviations, with the larger deviations penalized more heavily as $p$ increases.
- $w_i(M_i)$ is a weight function applied to the deviations based on the importance of the consensus score $M_i$ for each entity $i$, giving more weight to deviations for higher-ranked entities, where $w_i(M_i)$ is set to 0 for entities $i$ which have not been evaluated by evaluator $j$.

Preferably the Adjusted Distance $ED_j$ is applied with a weight function based on environmental or contextual importance.

Preferably the robust measure of location used to calculate the Initial Consensus for each entity $i$ is selected from: Mean, Median, Trimmed mean or Winsorized mean.

Preferably the outlier evaluators are identified using the Median Absolute Deviation (MAD) of the evaluator distances:

$$\text{Evaluator distance} > MED + R \cdot MAD$$

where $R$ is a constant, preferably in range 1 to 10, more preferably in range 1.9 to 3.3.

Preferably the data matrix $S_{ij}$ is derived from the sensor-based data collection systems or AI systems configured to analyze textual content to assign numerical ratings.

Preferably the computer system ranks evaluators based on their distance from the consensus, more preferably system recalculates the final aggregated results in real-time as new sensor data is received.

Preferably removing the outlier evaluators is adapted to identify and exclude sensors with readings that deviate from the consensus.

The invention also relates to a computer program comprising instructions which, when executed, cause the computer to carry out the method described.

Moreover, the invention relates to a computer-readable medium comprising instructions which, when executed, cause the computer to carry out the method described.

**Detailed Description of the Invention**

The invention comprises of the following methods and steps:

**1. Data Collection**

A data matrix $S_{ij}$ is created, where $i$ = 1 to $K$ are indexes of entities being evaluated (e.g., candidates in a competition, products in a review system), and $j$ = 1 to $L$ indexes the evaluators (e.g., jurors, experts, voters, or users). Each element $S_{ij}$ represents the evaluation provided by evaluator $j$ for entity $i$.

Evaluations typically take the form of scores or ratings. These scores can be directly assigned by evaluators or automatically generated by AI systems processing textual descriptions or reviews, such as on platforms like Amazon or Booking.com. For example, AI systems can analyze textual content to assign numerical ratings based on sentiment or other factors.

In cases where evaluators abstain from scoring certain entities (e.g., due to conflicts of interest), incomplete reviews (e.g., users not rating all products in a system) or where textual descriptions are incomplete or missing, these gaps are accounted for to ensure robust evaluation in real-world scenarios.

**2. Application of Evaluation Data Transposition (EDT) Method (Optional)**

**2.1 Description**

The Evaluation Data Transposition (EDT) method serves to equalize both the central measure (such as the mean or median) and the evaluation range (spread) of scores for each evaluator. This is particularly useful when evaluators use different scoring scales or exhibit biases in their scoring patterns. For instance, some evaluators might consistently assign higher scores, while others might be more conservative. By applying EDT, all evaluators' scores are transposed to ensure they operate within the same effective range, thereby balancing their influence on the outcome.

The EDT method overcomes the limitations of traditional approaches, which typically equalize either the central tendency (e.g., mean, median) or the range (spread) of scores, but not both simultaneously. By addressing both the central measure and the range or spread, the method ensures fairness in decision-making processes, especially in competitive environments, public voting events, educational assessments, and online review platforms. This comprehensive approach prevents any one evaluator from disproportionately influencing the result, ensuring a more balanced and fairer outcome.

While the EDT method is primarily designed for use in systems that process subjective assessments, it can also be applied in sensor data collection systems to equalize and normalize readings of miscalibrated sensors. The optional nature of this step allows for flexibility, depending on the specific evaluation system and the degree of variation in evaluators' scoring habits.

The method adjusts both the central measure (e.g., mean or median) and either the spread (the difference between the maximum and minimum values) or the entire range (the actual minimum and maximum values) of each evaluator's scores. This ensures all evaluators contribute equally to the results. There are two methods for performing the transposition:

- Linear Transposition: This method proportionally adjusts each evaluator's scores so that their central measure is equalized, and their spread is normalized. While this method ensures that all evaluators have the same spread, the specific minimum and maximum values (i.e., range) of scores may still differ. However, in most cases this is sufficient to prevent any one evaluator from disproportionately influencing the outcome based on their scoring behavior.

- Nonlinear Transposition: This method adjusts scores nonlinearly to align both the central measure and the entire range (minimum and maximum values) of each evaluator's scores. This ensures that both the central measure and the actual score range are uniform across all evaluators, providing complete uniformity in their influence on the result.

## 2.2 Linear Transposition Method

The linear transposition process consists of the following steps:

a. Calculate the Central Measure: For each evaluator $j$, calculate a central measure $M_j$, which can be the mean, median, or any other robust central measure across all entities they evaluated.

b. Set the Target Central Measure: Select the target central measure $M_{trg}$ for the transposed scores. This can be the average or median of all $M_j$, or of all scores $S_{ij}$, or another arbitrarily selected value.

c. Translate Scores to Match the Target Central Measure: Shift the scores for each evaluator $j$ to match the target central measure $M_{targ}$ using the formula:

$$\overline{S_{ij}} = S_{ij} + M_{trg} - M_j$$

This ensures that all evaluators have the same central measure.

d. Calculate the Spread: Calculate the spread $R_j$ for each evaluator, defined as the difference between the maximum and the minimum scores they assign:

$$R_j = S_{max_j} - S_{min_j}$$

e. Set the Target Spread: Determine the target spread for scores $R_{trg}$, which could be the average or median of $R_j$ across all evaluators or another arbitrary value.

f. Scale Scores to Match the Target Spread: Adjust the transposed scores $\overline{S_{ij}}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

After applying this linear transposition, all evaluators will have the same central measure and spread, ensuring equal influence on the final result.

## 2.3 Nonlinear Transposition

The nonlinear transposition process consists of the following steps:

a. Calculate the Minimum and Maximum Values: For each evaluator $j$, calculate the minimum $S_{min_j}$ and maximum $S_{max_j}$ values of their scores.
b. Define the Target Range: Set the target range defined by the minimum and maximum values $[S_{min_{trg}}, S_{max_{trg}}]$. This can be the average or median values of $S_{min_j}$ and $S_{max_j}$ across all evaluators. or any other arbitrary values.
c. Normalize Scores Within the Range [0,1]: Normalize each evaluator's scores to fit within the range [0,1] :

$$\overline{S_{ij}} = \frac{S_{ij} - S_{min_j}}{S_{max_j} - S_{min_j}}$$

d. Calculate the Average Normalized Values: Calculate the average normalized value $AM_j$ for each evaluator and the average normalized value $AM$ across all scores.

e. Apply the Nonlinear Transformation: Adjust the scores of each evaluator using a nonlinear transformation function, such as $f(x) = x^\alpha$, where $\alpha$ is the parameter controlling the transformation. The function is applied to ensure that each evaluator's average $AM_j$ matches the target average $AM$. The equation for each evaluator is:

$$\sum_i \overline{S_{ij}}^{\propto_j} = AM$$

This typically requires solving the nonlinear equation numerically to obtain the $\propto_j$ parameters for each evaluator.

f. Renormalize the Scores: After applying the nonlinear transformation, renormalize the scores to the target range using the formula:

$$\overline{\overline{S_{ij}}} = S_{min_{trg}} + \left( S_{max_{trg}} - S_{min_{trg}} \right) \overline{S_{ij}}^{\propto_j}$$

After applying this nonlinear transposition, all evaluators will have both the same central measure and the same absolute range of scores, ensuring uniformity in their impact on the final evaluations.

## 3. Application of Excluding Outlier Evaluators (EOE) Method

### 3.1 Description

A significant novelty of the method lies in scrutinizing the evaluators themselves. Traditionally, jurors have been treated as authoritative figures whose judgments were rarely questioned. This invention challenges that norm by examining not just the scores received by candidates, but the scores awarded by jurors, thus analyzing the behavior of jurors and identifying those whose evaluations are biased or manipulative. Methodologically, the method involves treating evaluators as potential outliers based on their entire vector of scores, rather than focusing solely on individual scores.

The methodology proceeds in two stages. In the first stage, the system calculates the distance between each evaluator's set of scores and the Initial Consensus using the novel Adjusted Minkowski Distance or the equally novel Adjusted Weighted Minkowski Distance. These distances are designed to handle incomplete data and allow flexible weighting of deviations based on their magnitude. This means that a single large deviation can have a greater impact on determining whether an evaluator is classified as an outlier compared to multiple smaller deviations. Additionally, the method emphasizes deviations for higher-ranked or more critical entities. For instance, in music competitions, deviations for top-ranked candidates may be given more weight than those for lower-ranked participants. Notably, these calculated distances can also serve to create rankings of evaluators based on their proximity to the consensus.

In the second stage, robust outlier detection techniques-such as Median Absolute Deviation (MAD)-are applied to these evaluator distances. A non-linear transformation is used to symmetrize potentially skewed distributions, improving the accuracy of the outlier detection process. A notable innovation, albeit intuitive within this context, is that only evaluators whose distance exceeds an upper-bound threshold are classified as outliers. Evaluators with smaller distances, being close to the consensus, may be regarded as excellent evaluators rather than outliers. Importantly, evaluators identified as outliers are excluded from the final decision-making process, and their entire set of evaluations is removed.

This two-stage process-first calculating meaningful distances of evaluators from the consensus and then applying outlier detection to these distances-marks a significant departure from traditional outlier detection methods, which typically analyze individual observations within a dataset. Additional innovations include the Adjusted Minkowski Distance and the Adjusted Weighted Minkowski Distance, tailored to meet the specific requirements of the application area. The method's flexible weighting and ability to handle missing data make it highly adaptable to real-world applications, including competitive scoring systems, public voting events, educational assessments, and online review platforms like Amazon or IMDb.

Notably, the invention has a dual impact: it statistically enhances accuracy by removing outlier evaluators along with all their scores and serves as a psychological deterrent. Knowing that outlier evaluators behavior may lead to exclusion discourages evaluators from engaging in manipulative or biased scoring, thereby strengthening decision-making processes across various domains.

The method involves the following steps:

### 3.2 Central Measure Calculation

For each entity $i$, a measure of location $M_i$ is calculated across all evaluators' scores. This measure could be the mean, median, or any other robust measure of location, such as a trimmed mean or Winsorized mean. The Initial Consensus, represented by the vector $M_i$, provides the benchmark against which each evaluator's scores are compared.

The robust central measures help ensure that the Initial Consensus reflects the general trend of evaluations without undue influence from extreme scores.

### 3.3 Adjusted Distance Calculation

Once the Initial Consensus is established, the Adjusted Distances between each evaluator's scores and the consensus are calculated using either the Adjusted Minkowski Distance or the Adjusted Weighted Minkowski Distance formulas.

### a) Adjusted Minkowski Distance

This distance accounts for the fact that not all evaluators evaluate all entities. The formula is defined as:

$$ED_j = \left( \frac{\sum_{i=1}^{K} |S_{ij} - M_i|^p}{K^*} \right)^{\frac{1}{p}}$$

where:

- $S_{ij}$ represents the score given by evaluator $j$ for entity $i$.
- $M_i$ is the central measure (e.g., mean, median) for entity $i$, representing the Initial Consensus.
- $K$ is the total number of entities, and $K^*$ is the number of entities actually evaluated by the evaluator $j$. The division by $K^*$ (absent in the original Minkowski distance definition) ensures the calculation handles incomplete data robustly.
- $p \geq 1$ is the parameter that controls the distance metric and the sensitivity to deviations. Examples include:

    ○ $p = 1$ (Manhattan distance): All deviations are treated with equal weight, resulting in the average of all absolute deviations.
    ○ $p = 2$ (Euclidean distance): Larger deviations are emphasized more, making the method more sensitive to outliers.
    ○ As $p$ increases, larger deviations become even more influential, and for $p = \infty$ (Chebyshev distance) only the largest deviation is considered.

The flexibility of the $p$ parameter allows for fine-tuning the method's sensitivity to extreme deviations, making it particularly useful when larger deviations need to be detected more aggressively. Using $p > 2$ can be advantageous when outliers with extreme deviations are of particular concern.

### b) Adjusted Weighted Minkowski Distance

In this version, a weight function $w_i(M_i)$ is introduced to adjust the importance of deviations based on the consensus score $M_i$. Entities with higher consensus scores (i.e., higher $M_i$) are considered more important, and deviations in those scores are given more weight. This ensures that evaluators who deviate significantly on key or top-rated entities are more likely to be identified as outliers, while deviations on less significant entities (e.g., lower-ranked entities) are given less weight.

The formula is:

$$WED_j = \left( \frac{\sum_{i=1}^{K} \left( w_i(M_i) \cdot |S_{ij} - M_i| \right)^p}{\sum_{i=1}^{K} w_i(M_i)^p} \right)^{\frac{1}{p}}$$

where:

- $w_i(M_i)$ is a function of $M_i$, assigning more weight to deviations for higher consensus scores, and reducing emphasis on less critical entities, where $w_i(M_i)$ is set to 0 for entities $i$ which have not been evaluated by evaluator $j$.

Example Weight Functions

- Linear Weight:

$$w_i(M_i) = M_i$$

This gives more importance to deviations for entities with higher central measures (higher $M_i$).

- Power Function:

$$w_i(M_i) = M_i^{\,k} \text{ with } k > 0$$

This function accentuates the weight even more for higher $M_i$, providing stronger emphasis on deviations for top-ranked entities.

- Inverse Weight (for Rankings):

If $M_i$ represents rankings (with lower values being better), the weight function should be decreasing with $M_i$, i.e., more weight is given to deviations for entities ranked higher (lower $M_i$):

$$w_i(M_i) = \frac{1}{M_i} \text{ or } w_i(M_i) = \frac{1}{M_i^{\,k}} \text{ with } k > 0$$

This ensures that deviations for highly ranked entities (small $M_i$) are considered more important.

This weighting strategy allows the method to focus on critical evaluations while minimizing the risk of penalizing evaluators for larger deviations on less important entities, thereby improving both fairness and accuracy in the outlier detection process.

## 3.4 Nonlinear Transformation of Evaluator Distances

Since the distribution of the evaluator distances $ED_j$ may not be symmetric, a nonlinear transformation function $f$ is applied to adjust the distances, making the distribution more even. Typical transformation functions include:

- $f(x) = ln(x)$ (natural logarithm), or
- $f(x) = x^{\propto}$ (power function, with $\propto > 1$),

but other nonlinear transformations may be used depending on the characteristics of the distance distribution.
This transformation ensures that the distribution of distances becomes more symmetric, reducing the effect of skewed distributions that might distort the detection of outlier evaluators. By applying this transformation, the outlier detection process becomes more consistent and reliable across different evaluation scenarios. After transformation, the evaluator distances are updated as:

$$ED_j^* = f\left( ED_j \right) \text{ or } ED_j^* = f\left( WED_j \right)$$

### 3.5 Outlier Evaluators Identification

Outlier evaluators are identified by comparing their transformed distances $ED_j^*$ to a robust upper-bound threshold. The preferred method for setting this threshold is based on the Median Absolute Deviation (MAD):

$$ED_j^* > MED + R \cdot MAD$$

where R is a constant typically between 1 and 10 (more preferably 1.9 and 3.3). *MAD* is defined as:

$$MAD = \mathrm{median}\left(\left|ED_j^* - MED\right|\right)$$

where *MED* is the median of the evaluator distances $ED_j^*$.

Alternative methods (e.g. using mean and standard deviation, or interquartile range) can be used, but MAD is more robust and effective in identifying outlier evaluators in the presence of extreme deviations.

Unlike traditional methods, only large deviations are targeted, while smaller deviations (closer to the consensus) are not penalized. This approach ensures that good evaluators-those who align closely with the consensus-remain in the process, while manipulative or biased outliers are excluded

### 4 Corrective Actions

Once outlier evaluators are identified, corrective actions are taken to ensure they do not influence the final results. The primary corrective action is to remove all evaluations provided by the outlier evaluators. This is the most effective action, ensuring that manipulative or biased evaluators do not distort the decision-making process. The removal of outlier evaluators serves a dual function:

1. Statistical Correction: Ensuring that the final results are not impacted by opinions of extreme evaluators.
2. Psychological Deterrence: The awareness that evaluators could be excluded from the process serves as a deterrent, discouraging manipulative behavior and encouraging more honest evaluations.

Exclusion of outlier evaluators can be combined with other methods (e.g., exclusion of evaluators forming a clique) for further refinement and improved fairness.

While the primary corrective action is removing outlier evaluators, less severe actions may include replacing their evaluations with aggregated data based on historical performance or robust statistical measures. For instance, their evaluations could be replaced with the median or mean score from previous evaluations. However, this weakens the psychological deterrence of the method.

### 5 Recalculation of Final Results

After implementing corrective actions, the data matrix is recalculated using robust statistical measures, such as the mean, median, or trimmed mean. The final results are now free from the influence of identified outlier evaluators, ensuring improved accuracy and fairness in decision-making processes.

### 6 Software Implementation and Practical Integration

The proposed method for identifying and excluding outlier evaluators is designed to be integrated into a software system that automates the collection, processing, and analysis of evaluation data in real-time. This system is adaptable across different evaluative contexts, such as classical music competitions, sports tournaments, academic assessments, and online review platforms, where manual data entry and basic outlier evaluators detection methods are often time-consuming and prone to errors.

By automating the evaluation process, the software enables faster, more accurate, and fairer decision-making. It supports a broad range of evaluation formats, including multiple competition stages, custom weighting systems, time limits for juror evaluations, and diverse voting systems.

The system includes:

- Data Input Module: Collects scores from evaluators and stores them in the data matrix.
- Distance Calculation Engine: Performs distance calculations using the Adjusted Minkowski Distance or the Pairwise Adjusted Weighted Minkowski Distance formulas.
- Outlier Detection Module: Applies statistical measures to detect outlier evaluators.
- Corrective Action Module: Removes or neutralizes the influence of outlier evaluators and recalculates the final results.
- User Interface: Provides real-time monitoring, visualizations of outlier evaluators, and reports on the fairness of the evaluation process.

The system's versatility allows it to cater to specific needs across different domains:

**a) Small-Scale Competitions: e.g., Classical Music Competitions**

*System Features:*

- Pre-registration of participants and jurors: Enables seamless tracking of relationships (e.g., juror-student conflicts), automatically preventing jurors from scoring their own students, enhancing fairness.

- Real-Time Data Entry and Processing: Jurors submit their scores during or immediately after each performance directly into the platform via a secure digital interface. This eliminates manual transcription, enabling processing in real time, and providing immediate calculation of results, drastically reducing the time needed to compute outcomes.

- Automated Outlier Detection: The system applies the EDT and EOE methods, including the calculation of the Initial Consensus, evaluator distances, transformation of distances, and outlier evaluator detection using robust statistical measures such as the Median Absolute Deviation (MAD). Evaluators flagged as outliers are automatically excluded from the final results, along with their entire set of evaluations.

- Custom Time Limits for Jury Submissions: Competition organizers can set time limits for jurors to submit their evaluations. Jurors are notified of the remaining time, helping keep the competition on schedule.

- Juror Notes Collection: In addition to submitting scores, jurors can submit notes or comments about each performance. These notes are stored for later reference, assisting jurors in later stages of the competition or during post-competition feedback discussions.

- Support for Cumulative Scoring: The system supports cumulative scoring across all stages of the competition, allowing different weights to be applied to each stage according to the competition's rules. This ensures that performances from earlier stages are appropriately factored into the final score.

- Support for Special Awards: In addition to handling the main competition, the system can accommodate different voting systems for special awards, which may have unique evaluation criteria or rules compared to the main event.

- Ranking of evaluators: The system ranks evaluators based on their proximity to the consensus using the Adjusted (Weighted) Minkowski Distance. This feature enables real-time monitoring of juror behavior and performance, encouraging consistent and unbiased evaluations.

This software drastically reduces the time required to enter scores and process results, enabling near-instantaneous calculation of outcomes after each stage. The system's ability to handle complex competition rules and time-sensitive submissions makes it suitable for a wide range of regional, national, and international competitions.

**b) Large-Scale Public Voting: Eurovision-Style Voting**

In large public voting events, such as the Eurovision Song Contest, viewers vote for their favorite performances. Current voting systems are often simplistic, typically allowing each viewer to vote for only one candidate. These systems are vulnerable to manipulation and organized efforts to unfairly promote certain candidates.

The proposed system enhances public voting by enabling more detailed and nuanced voting methods, allowing participants to rate or rank multiple candidates, providing a more accurate assessment of each performer's merit. It is specifically designed to support large-scale public participation while detecting and preventing manipulative voting patterns through robust outlier detection. The system is capable of handling events where thousands or even millions of votes are cast within a short window of time.

*System Features:*

- Detailed Public Voting: Participants can rank multiple candidates or assign scores to each one, offering a more nuanced voting approach and ensuring fairer, more representative results.

- Real-Time Outlier Detection: The software applies the proposed outlier detection method to identify and exclude individual voters or coordinated voting groups that attempt to manipulate results.

- Scalability for Short Voting Windows: Large-scale public votes, such as those in Eurovision-style contests, often occur within a limited timeframe, requiring substantial computational resources. The system is built to scale efficiently using cloud infrastructure, ensuring that millions of votes can be processed quickly and fairly within the given time constraints.

- Multiple Voting Systems: The system can support different voting systems within the same event. For example, juror panels can evaluate candidates separately from expert or journalist panels and the public vote, each group using distinct evaluation rules. Additionally, special awards may have their own set of evaluation criteria. This flexibility allows for multiple voting systems to operate within a single event, processing juror, expert, and public votes independently, with different rules applied as needed.

This system offers greater flexibility in public voting and ensures fairness by identifying and excluding manipulative voting patterns. Its ability to handle large-scale voting in real-time makes it ideal for national and international contests, such as Eurovision, where rapid and accurate results are crucial.

**c) Continuous Review Systems: Online Review Platforms**

Platforms like Amazon, Booking.com, and IMDb rely on user-generated reviews to determine product, service, or entertainment ratings. However, these platforms are vulnerable to manipulation by coordinated groups of users who attempt to skew ratings in favor of or against specific items.

The proposed system integrates seamlessly with existing databases to provide real-time recalculations of ratings as new reviews are submitted. It uses robust outlier detection methods to identify and exclude biased or manipulative reviewers, ensuring that ratings accurately reflect genuine user preferences.

*System Features:*

- Continuous Review Processing: The system recalculates aggregate ratings in real time as new reviews are submitted. It continuously monitors for outlier evaluators, ensuring that product and service ratings reflect the broader user base's genuine preferences.

- Outlier Detection: Using the proposed outlier detection method, the system identifies and excludes reviewers or manipulative groups whose behavior significantly deviates from the consensus, preventing skewed reviews from distorting overall ratings.

- Juror and Reviewer Ranking: In addition to detecting outliers, the system ranks reviewers based on their consistency with the consensus. Reviewers with the lower Adjusted (Weighted) Minkowski Distances are ranked higher, as they are considered more reliable. Reviewers who frequently deviate from the consensus or are identified as outliers are flagged and ranked lower.

The system enhances the reliability of online review platforms by detecting and excluding manipulative reviewers. By recalculating aggregate scores in real time and ranking reviewers based on reliability, the platform becomes more transparent and trustworthy for users.

**d) Censor Data Systems**

While primarily designed for systems processing subjective assessments, the EDT and EOE methods are versatile enough for applications in sensor-based data collection systems. In cases where sensor data may be affected by calibration differences or environmental factors, EDT can normalize readings across sensors, while EOE can identify and exclude outlier sensors, ensuring the accuracy of aggregated data.

**Potential Applications**

- Performance-based competitions (e.g., music, sports):
  The system ensures fairness in competitive environments by identifying and excluding evaluators (such as jurors) whose evaluations deviate significantly from the consensus. This prevents manipulation by outlier evaluators attempting to skew results in favor of or against specific participants, ensuring that results reflect the consensus of all evaluators. Additionally, the system automates juror evaluations, detects outlier evaluators in real-time, and significantly reduces the time needed to announce results, which is critical in time-sensitive competitive environments.

- Large-Scale Public Voting Systems (e.g., Eurovision):
  The system is capable of handling massive volumes of votes cast within short time windows, as is typical in events like the Eurovision Song Contest. By identifying coordinated voting patterns and detecting outlier evaluators, it ensures the integrity of public voting results, preventing groups of voters from disproportionately affecting the outcome.

- Voting systems (political and non-political):
  The system detects outlier evaluators in voting behavior, identifying voters whose votes deviate significantly from the consensus and excluding them from influencing the outcome. This method prevents individuals or groups from disproportionately impacting results, promoting fairer election processes.

- Educational and professional assessments:
  The system improves the fairness and accuracy of academic assessments, such as standardized testing or professional certifications. By identifying and excluding outlier evaluators (e.g., teachers or examiners) whose scores deviate significantly from the consensus, it ensures that final results reflect the general consensus of evaluators, rather than being skewed by individual biases.

- Online review systems (e.g., Amazon, Booking.com):
  The system detects and excludes outlier reviews or identifies coordinated manipulative actions by groups of reviewers to skew product or service ratings. By applying outlier detection to reviews, the system ensures that aggregated ratings more accurately reflect genuine user preferences. Real-time review processing helps platforms like Amazon and Booking.com maintain the reliability of their rating systems.

- Entertainment rating platforms (e.g., IMDb, Rotten Tomatoes):
  The system prevents manipulation of entertainment reviews by identifying users whose ratings deviate significantly from the consensus. By excluding manipulative or biased reviews, it helps maintain the integrity of aggregated ratings for films, TV shows, or other media, ensuring a fair reflection of public opinion.

- Sensor-Based Data Collection Systems
  The system's flexibility extends to sensor-based data collection in environments where sensor readings may be affected by calibration discrepancies, environmental factors, or device-specific biases. By applying the EDT method, the system normalizes and equalizes sensor readings across devices, ensuring that all sensors contribute consistently to the aggregated data. In addition, the EOE method identifies outlier sensors whose measurements significantly deviate from the consensus, thus excluding them from influencing the final results. This capability is especially valuable in industries such as environmental monitoring, industrial automation, and healthcare, where reliable and accurate data aggregation is essential for decision-making.

**Conclusions**

The proposed system integrates advanced statistical techniques, such as the Evaluation Data Transposition (EDT) method, Adjusted Minkowski Distance, and robust outlier detection, into a real-time evaluation platform. This integration ensures that results are accurate, timely, and fair, even in highly subjective evaluative systems. With capabilities to rank evaluators, automate results processing, and handle large-scale voting and review systems, the system is applicable across diverse fields, from performance-based competitions to sensor-based data collection and online review platforms.

This method provides a robust and flexible approach for identifying and excluding outlier evaluators, thus improving both the accuracy and fairness of decision-making processes in a wide range of applications. By focusing on the entire set of evaluations provided by each evaluator, rather than individual scores alone, the method addresses both subjective and objective deviations from the consensus effectively.

The inclusion of EDT enhances evaluator consistency by normalizing both the central measure and scoring range, balancing evaluator influence. Meanwhile, the Adjusted Minkowski Distance and the Adjusted Weighted Minkowski Distance formulas offer unprecedented flexibility in tailoring the method to specific evaluation contexts, allowing for effective handling of missing data, adjustable weighting for critical evaluations, and nuanced responses to varying levels of deviation based on entity importance. Nonlinear transformations further refine outlier detection, particularly where evaluator distance distributions are skewed, and robust measures of location, such as the median or trimmed mean, ensure that extreme deviations do not disproportionately affect final outcomes.

The method's adaptability across a broad spectrum of evaluators, whether jurors, voters, experts, reviewers, or sensor data sources-makes it highly effective in real-world scenarios. It is applicable to competitive performance evaluations, educational and professional assessments, large-scale public voting, continuous online review systems, and sensor-based data collection environments. By automating data collection, analysis, and the detection and exclusion of manipulative evaluators, this system provides a pioneering solution for enhancing the accuracy, reliability, and fairness of decision-making processes across varied and complex evaluative contexts.

**Claims**

1. A method for detecting the outlier evaluators in an evaluation process comprising steps of:

   a. collecting a data matrix $S_{ij}$ to a computer system using an automatic input interface, wherein the elements of the matrix $S_{ij}$ are the real numbers in a predefined range, wherein each of the elements of the matrix $S_{ij}$ represent a numerical evaluation provided by an evaluator $j$ for an evaluated entity $i$,
   b. for each of the entity $i$ calculating by the computer system an Initial Consensus in a form of a vector $M_i$ using a robust measure of location,
   c. calculating by the computer system an Adjusted Distances $ED_j$ between each of the data matrix $S_{ij}$ provided by the evaluator $j$ for the entity $i$ and the Initial Consensus $M_i$,
   d. applying by the computer system a nonlinear transformation function $f$ to the Adjusted Distances $ED_j$,

$$ED_j^* = f\left(ED_j\right)$$

   preferably using a natural logarithm $f(x) = ln(x)$ or a power function $f(x) = x^\infty$,
   e. identifying by the computer system the outlier evaluators by detecting the transformed Adjusted Distances

$$ED_j^*$$

   exceeding a robust upper-bound threshold.

2. The method according to claim 1, wherein after step b) there is performed operation of a Data Transposition comprising following steps:

   b1) setting by the computer system a Target Central Measure $M_{trg}$, preferably a median or an average of the data matrix $S_{ij}$,
   b2) calculating by the computer system the transposed scores $\overline{S_{ij}}$ by shifting the entities $i$ for each of the evaluator $j$ to match the target central measure $M_{trg}$ using the formula:

$$\overline{S_{ij}} = S_{ij} + M_{trg} - M_j$$

   where $M_j$ is a central measure for each of the evaluator $j$, which can be the mean, median, or any other robust central measure across all the entities $i$ the evaluator $j$ evaluated,

b3) calculating by the computer system a spread $R_j$ for each of the evaluators $j$, defined as:

$$R_j = S_{max_j} - S_{min_j}$$

b4) determining by the computer system a target spread for scores $R_{trg}$, preferably an average or a median across all the evaluators $j$

b5) adjusting by the computer system the transposed scores $\overline{S_{ij}}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

wherein the data matrix $\overline{\overline{S_{ij}}}$ replaces the data matrix $S_{ij}$ for calculation of further steps.

3. The method according to claim 1, wherein after step a) there is performed operation of Nonlinear Data Transposition comprising following steps:

a1) calculating by the computer system for each of the evaluator $j$ a minimum $S_{min_j}$ a maximum $S_{max_j}$ values of their entities $i$,

a2) setting by the computer system a Target Range [$S_{min_{trg}}$, $S_{max_{trg}}$] preferably a median or an average of the minimum $S_{min_j}$ and maximum $S_{max_j}$,

a3) normalizing by the computer system each of the evaluators $j$, entity $i$ to fit within a range [0, 1] using the formula:

$$\overline{S_{ij}} = \frac{S_{ij} - S_{min_j}}{S_{max_j} - S_{min_j}}$$

a3) calculating by the computer system the Average Normalized Values $AM_j$ for each of the evaluator $j$ and an average normalized value $AM$ across all entities $i$,

a4) adjusting by the computer system the entities $i$ of each of the evaluator $j$ using a nonlinear transformation function such that $f(x) = x^{\alpha}$, where $\alpha$ is a parameter controlling the transformation, wherein the equation for each of the evaluator $j$ is:

$$\sum_i \overline{S_{ij}}^{\alpha_j} = AM$$

a4) renormalize by the computer system the entities $i$, using the formula:

$$\overline{\overline{S_{ij}}} = S_{min_{trg}} + \left(S_{max_{trg}} - S_{min_{trg}}\right) \overline{S_{ij}}^{\alpha_j}$$

wherein the data matrix $\overline{\overline{S_{ij}}}$ replaces the data matrix $S_{ij}$ for calculations of further steps.

4. The method according to claim 1, 2 or 3, wherein after step e) it comprises step:
f) removing by the computer system the outlier evaluators $j$ and their associated entities $i$ from the data matrix $S_{ij}$ or replacing their entities $i$ with an aggregated data based on a historical performance or the robust statistical measures.

5. The Method according to claim 1, 2, 3 or 4, wherein after step f) it comprises final step: recalculating by the computer system the results using robust measures of location, preferably mean, median or trimmed mean.

6. The method according to claim 1, 2, 3, 4 or 5, wherein the Adjusted Distances $ED_j$ are calculated using the Adjusted Minkowski Distance formula:

$$ED_j = \left( \frac{\sum_{i=1}^{K} |S_{ij} - M_i|^p}{K^*} \right)^{\frac{1}{p}}$$

where:

- $S_{ij}$ is the score given by evaluator $j$ for entity $i$,
- $M_i$ is the Initial Consensus score for entity $i$,
- $K$ is the total number of the entities $i$,
- $K^*$ is a number of the entities $i$ evaluated by the evaluator $j$,
- $p \geq 1$ is a parameter suitable for the flexible weighting of deviations, with the larger deviations penalized more heavily as $p$ increases.

7. The method according to claim 1, 2, 3 or 4 wherein the Adjusted Distances is calculated using the Adjusted Weighted Minkowski Distance formula:

$$ED_j = \left( \frac{\sum_{i=1}^{K} \left( w_i(M_i) \cdot |S_{ij} - M_i| \right)^p}{\sum_{i=1}^{K} w_i(M_i)^p} \right)^{\frac{1}{p}}$$

where:

- $S_{ij}$ is the score given by the evaluator $j$ for the entity $i$,
- $M_i$ is the Initial Consensus score for the entity $i$,
- $K$ is the total number of the entities $i$,
- $K^*$ is the number of the entities $i$ evaluated by the evaluator $j$,
- $p \geq 1$ is a parameter allowing flexible weighting of the deviations, with the larger deviations penalized more heavily as $p$ increases,
- $w_i(M_i)$ is a weight function applied to the deviations based on the importance of the consensus score $M_i$ for each entity $i$, giving more weight to deviations for higher-ranked entities, wherein if entity $i$ is not evaluated, $w_i(M_i)$ is set to 0.

8. The method according to any of the proceeding claims, wherein the Adjusted Distance $ED_j$ is applied with a weight function based on environmental or contextual importance.

9. Method according to any of the proceeding claims, wherein the robust measure of location used to calculate the Initial Consensus for each of the entities $i$ is selected from: Mean, Median, Trimmed mean or Winsorized mean.

10. Method according to any of the proceeding claims, wherein the outlier evaluators are identified using the Median Absolute Deviation (MAD) of the evaluator distances:

$$\text{Evaluator distance} > MED + R \cdot MAD$$

where $R$ is a constant, preferably in range 1 to 10, more preferably in range 1.9 to 3.3.

11. The method according to any of the proceeding claims, wherein the data matrix $S_{ij}$ is derived from a sensor-based data collection systems or an AI system configured to analyze a textual content to assign the numerical ratings.

12. The method according to any of the proceeding claims, wherein the computer system ranks the evaluators $j$ based on their distance from the consensus, preferably the computer system recalculates the final aggregated results in real-time as the new sensor data is received.

13. The method according to claim 12, wherein removing the outlier evaluators is adapted to identify and exclude the sensors with readings that deviate from the consensus.

14. A computer program comprising instructions which, when executed, cause the computer to carry out the method of any one of claims 1 to 13.

15. A computer-readable medium comprising instructions which, when executed, cause the computer to carry out the method of any one of claims 1 to 13.

**Amended claims in accordance with Rule 137(2) EPC.**

1. A computer implemented method for detecting the outlier evaluators in an evaluation process comprising steps of:

   a. collecting a data matrix $S_{ij}$ to a computer system using an automatic input interface, wherein the elements of the matrix $S_{ij}$ are the real numbers in a predefined range, wherein each of the elements of the matrix $S_{ij}$ represent a numerical evaluation provided by an evaluator $j$ for an evaluated entity $i$,
   b. for each of the entity $i$ calculating by the computer system an Initial Consensus in a form of a vector $M_i$ using a robust measure of location,
   c. calculating by the computer system an Adjusted Distances $ED_j$ between each of the data matrix $S_{ij}$ provided by the evaluator $j$ for the entity $i$ and the Initial Consensus $M_i$, wherein the Adjusted Distances $ED_j$ are calculated using Adjusted Minkowski Distances or Adjusted Weighted Minkowski Distances,
   d. applying by the computer system a nonlinear transformation function $f$ to the Adjusted Distances $ED_j$,

$$ED_j^* = f\left(ED_j\right)$$

   preferably using a natural logarithm $f(x) = ln(x)$ or a power function $f(x) = x^\infty$, e. identifying by the computer system the outlier evaluators by detecting the transformed Adjusted Distances $ED_j^*$ exceeding a robust upper-bound threshold.

2. The computer implemented method according to claim 1, wherein after step a) there is performed operation of a Data Transposition comprising following steps:

   b1) setting by the computer system a Target Central Measure $M_{trg}$, preferably a median or an average of the data matrix $S_{ij}$,
   b2) calculating by the computer system the transposed scores $\overline{S_{ij}}$ by shifting the entities $i$ for each of the evaluator $j$ to match the target central measure $M_{trg}$ using the formula:

$$\overline{S_{ij}} = S_{ij} + M_{trg} - M_j$$

   where $M_j$ is a central measure for each of the evaluator $j$, which can be the mean, median, or any other robust central measure across all the entities $i$ the evaluator $j$ evaluated,
   b3) calculating by the computer system a spread $R_j$ for each of the evaluators $j$, defined as:

$$R_j = S_{max_j} - S_{min_j}$$

   b4) determining by the computer system a target spread for scores $R_{trg}$, preferably an average or a median across all the evaluators $j$
   b5) adjusting by the computer system the transposed scores $\overline{S_{ij}}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

wherein the data matrix $\overline{\overline{S_{ij}}}$ replaces the data matrix $S_{ij}$ for calculation of further steps.

3. The computer implemented method according to claim 1, wherein after step a) there is performed operation of Nonlinear Data Transposition comprising following steps:

a1) calculating by the computer system for each of the evaluator $j$ a minimum $S_{min_j}$ a maximum $S_{max_j}$ values of their entities $i$,

a2) setting by the computer system a Target Range $[S_{min_{trg}}, S_{max_{trg}}]$ preferably a median or an average of the minimum $S_{min_j}$ and maximum $S_{max_j}$,

a3) normalizing by the computer system each of the evaluators $j$, entity $i$ to fit within a range $[0, 1]$ using the formula:

$$\overline{S_{ij}} = \frac{S_{ij} - S_{min_j}}{S_{max_j} - S_{min_j}}$$

a3) calculating by the computer system the Average Normalized Values $AM_j$ for each of the evaluator $j$ and an average normalized value $AM$ across all entities $i$,

a4) adjusting by the computer system the entities $i$ of each of the evaluator $j$ using a nonlinear transformation function such that $f(x) = x^{\alpha}$, where $\alpha$ is a parameter controlling the transformation, wherein the equation for each of the evaluator j is:

$$\sum_i \overline{S_{ij}}^{\alpha_j} = AM$$

a4) renormalize by the computer system the entities $i$, using the formula:

$$\overline{\overline{S_{ij}}} = S_{min_{trg}} + \left(S_{max_{trg}} - S_{min_{trg}}\right)\overline{S_{ij}}^{\alpha_j}$$

wherein the data matrix $\overline{\overline{S_{ij}}}$ replaces the data matrix $S_{ij}$ for calculations of further steps.

4. The computer implemented method according to claim 1, 2 or 3, wherein after step e) it comprises step:

f) removing by the computer system the outlier evaluators $j$ and their associated entities $i$ from the data matrix $S_{ij}$ or replacing their entities $i$ with an aggregated data based on a historical performance or the robust statistical measures.

5. The computer implemented method according to claim 1, 2, 3 or 4, wherein after step f) it comprises final step: recalculating by the computer system the results using robust measures of location, preferably mean, median or trimmed mean.

6. The computer implemented method according to claim 1, 2, 3, 4 or 5, wherein the Adjusted

Distances $ED_j$ are calculated using the Adjusted Minkowski Distance formula:

$$ED_j = \left(\frac{\sum_{i=1}^{K} |S_{ij} - M_i|^p}{K^*}\right)^{\frac{1}{p}}$$

where:

• $S_{ij}$ is the score given by evaluator $j$ for entity $i$,
• $M_i$ is the Initial Consensus score for entity $i$,
• $K$ is the total number of the entities $i$,
• $K^*$ is a number of the entities $i$ evaluated by the evaluator $j$,
• $p \geq 1$ is a parameter suitable for the flexible weighting of deviations, with the larger deviations penalized more heavily as p increases.

7. The computer implemented method according to claim 1, 2, 34, or 5 wherein the Adjusted Distances is calculated using the Adjusted Weighted Minkowski Distance formula:

$$ED_j = \left( \frac{\sum_{i=1}^{K} \left( w_i(M_i) \cdot |S_{ij} - M_i| \right)^p}{\sum_{i=1}^{K} w_i(M_i)^p} \right)^{\frac{1}{p}}$$

where:

• $S_{ij}$ is the score given by the evaluator $j$ for the entity $i$,
• $M_i$ is the Initial Consensus score for the entity $i$,
• $K$ is the total number of the entities $i$,
• $K^*$ is the number of the entities $i$ evaluated by the evaluator $j$,
• $p \geq 1$ is a parameter allowing flexible weighting of the deviations, with the larger deviations penalized more heavily as $p$ increases,
• $w_i(M_i)$ is a weight function applied to the deviations based on the importance of the consensus score $M_i$ for each entity $i$, giving more weight to deviations for higher-ranked entities, wherein if entity $i$ is not evaluated, $w_i(M_i)$ is set to 0.

8. The computer implemented method according to any of the proceeding claims, wherein the Adjusted Distance $ED_j$ is applied with a weight function based on environmental or contextual importance.

9. The computer implemented ethod according to any of the proceeding claims, wherein the robust measure of location used to calculate the Initial Consensus for each of the entities $i$ is selected from: Mean, Median, Trimmed mean or Winsorized mean.

10. The computer implemented ethod according to any of the proceeding claims, wherein the outlier evaluators are identified using the Median Absolute Deviation (MAD) of the evaluator distances:

$$\text{Evaluator distance} > MED + R \cdot MAD$$

where $R$ is a constant, preferably in range 1 to 10, more preferably in range 1.9 to 3.3.

11. The computer implemented method according to any of the proceeding claims, wherein the data matrix $S_{ij}$ is derived from a sensor-based data collection systems or an AI system configured to analyze a textual content to assign the numerical ratings.

12. The computer implemented method according to any of the proceeding claims, wherein the computer system ranks the evaluators $j$ based on their distance from the consensus, preferably the computer system recalculates the final aggregated results in real-time as the new sensor data is received.

13. The computer implemented method according to claim 12, wherein removing the outlier evaluators is adapted to identify and exclude the sensors with readings that deviate from the consensus.

14. A computer program comprising instructions which, when executed, cause the computer to carry out the method of any one of claims 1 to 13.

**15.** A computer-readable medium comprising instructions which, when executed, cause the computer to carry out the method of any one of claims 1 to 13.

Europäisches
Patentamt

European
Patent Office

Office européen
des brevets

# EUROPEAN SEARCH REPORT

**Application Number**

EP 24 21 4369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONTEK KRZYSZTOF ET AL: "Identifying outlier scores and outlier jurors to reduce manipulation in classical music competitions", JOURNAL OF CULTURAL ECONOMICS, 28 November 2023 (2023-11-28), XP093241534, Boston ISSN: 0885-2545, DOI: 10.1007/s10824-023-09494-7 Retrieved from the Internet: URL:https://link.springer.com/article/10.1007/s10824-023-09494-7/fulltext.html> * pages 1, 16 * * pages 17, 38 * | 1-15 | INV. G06F17/18 |
| A | ISRAJ ALI ET AL: "A distance metric based outliers detection for robust Automatic Speaker Recognition applications", INDIA CONFERENCE (INDICON), 2011 ANNUAL IEEE, IEEE, 16 December 2011 (2011-12-16), pages 1-4, XP032103031, DOI: 10.1109/INDCON.2011.6139358 ISBN: 978-1-4577-1110-7 * page 2 * | 1-15 | |
| | | | TECHNICAL FIELDS SEARCHED (IPC) |
| | | | G06F |
| A | EP 3 156 941 A1 (SIEMENS AG [DE]) 19 April 2017 (2017-04-19) * paragraphs [0003], [0004] * | 1-15 | |

-/--

The present search report has been drawn up for all claims

| Place of search | Date of completion of the search | Examiner |
|---|---|---|
| Munich | 11 April 2025 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 21 4369

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIM EE-PENG ET AL: "Detecting product review spammers using rating behaviors", CIKM'10, PROCEEDINGS OF THE 19TH INTERNATIONAL CONFERENCE ON INFORMATION & KNOWLEDGE MANAGEMENT AND CO-LOCATED WORKSHOPS : OCTOBER 26 - 30, 2010, TORONTO, ONTARIO, CANADA, ACM, NEW YORK, NY, 26 October 2010 (2010-10-26), pages 939-948, XP058598019, DOI: 10.1145/1871437.1871557 ISBN: 978-1-4503-0099-5 * pages 940, 941 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 11 April 2025 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4369

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| EP 3156941 A1 | 19-04-2017 | NONE | |

EPO FORM P0459

For more details about this annex : see Official Journal of the European Patent Office, No. 12/82